Europäisches Patentamt

European Patent Office

Office européen des brevets

(11) Veröffentlichungsnummer: **0 344 457**
**A2**

## EUROPÄISCHE PATENTANMELDUNG

(21) Anmeldenummer: 89107423.9

(51) Int. Cl.⁴: **H01H 47/22**

(22) Anmeldetag: 25.04.89

(30) Priorität: 30.05.88 DE 3818289

(43) Veröffentlichungstag der Anmeldung:
**06.12.89 Patentblatt 89/49**

(84) Benannte Vertragsstaaten:
**AT BE CH DE ES FR GB IT LI NL SE**

(71) Anmelder: **SIEGENIA-FRANK KG**
**Eisenhüttenstrasse 22 Postfach 10 05 01**
**D-5900 Siegen 1(DE)**

(72) Erfinder: **Kucharczyk, Eckhard**
**Erlenstrasse 39a**
**D-5901 Wilnsdorf 2(DE)**

(54) **Elektrische Relaissteuervorrichtung für einen Netzschalter.**

(57) Es wird eine elektrische Relaissteuervorrichtung für einen Netzschalter 37 vorgeschlagen, die sich mit geringem baulichem Aufwand sowie raumsparend erstellen läßt und deren Wirkungsweise dabei praktisch nicht durch an deren elektrischen Bauelementen entstehende Verlustwärme beeinträchtigt werden kann.

Ein Kleinspannungs-Gleichstromrelais 18, z.B. mit einer Nennspannung von 12 Volt, wird hierbei durch mindestens einen Schaltkontakt 43 mit einem Niederspannungs-Wechselstromnetz von beispielsweise 220 Volt Nennspannung verbunden. Der Schalt-Stromkreis für das Relais 38 liegt über einen Kondensator 39 und einen Brückengleichrichter 40 am Wechselstromnetz an. Zwischen den Plus-Ausgang und den Minus-Ausgang des Brückengleichrichters 40 ist ein Kondensator 41 gelegt. Weiterhin ist ein Transistor 42 über seinen Kollektor und seinen Emitter in Reihe mit dem Relais 38 an den Plus-Ausgang des Brückengleichrichters gelegt, während die Basis dieses Transistors 42 über den Schaltkontakt 43 mit dem Plus-Ausgang des Brückengleichrichters 40 verbindbar ist. Der Schaltkontakt 43 weist als Schaltglied eine temperaturabhängig verformbare Thermometerfeder oder aber eine in Abhängigkeit von der Luftfeuchte verformbare Hygrometerfeder auf.

Fig. 1

## Elektrische Relaissteuervorrichtung für einen Netzschalter

Die Erfindung betrifft eine elektrische Relaissteuervorrichtung für einen Netzschalter, insbesondere zur selbsttätigen Betriebssteuerung von Geräten und/oder Anlagen zum Heizen, Kühlen, Lüften und Klimatisieren von Räumen sowie zur Wärmerückgewinnung, bei welcher ein Kleinspannungs-Gleichstromrelais, z.B. mit einer Nennspannung von 12 Volt, durch mindestens einen Schaltkontakt mit einem Niederspannungs-Wechselstromnetz, von beispielsweise 220 Volt Nennspannung, verbindbar ist.

An Gebäuden, und zwar insbesondere in Wohn- und Arbeitsräumen, treten häufig Bauschäden durch Pilz- bzw. Schimmelbefall auf, die in den weitaus meisten Fällen auf falsche Lüftungsgewohnheiten der Bewohner bzw. Benutzer zurückzuführen sind.

Zur Vermeidung solcher Bauschäden ist es wichtig, daß die relative Luftfeuchte bei Raumtemperaturen um 20...25° C einen Wert von 50% nicht wesentlich überschreitet, weil sonst - bedingt durch Kondenswasserbildung und entsprechende Substratfeuchte der Raumgegenstände - zunehmend Pilz- bzw. Schimmelwachstum auftritt.

Es finden sich dann nicht nur hellfarbige Schimmelpilze, sondern verbreitet auch Schwärzepilze, die besonders gut auf feuchten Wänden gedeihen.

Werden solche Pilze von Menschen eingeatmet, dann können sich auch schwere Gesundheitsschäden, beispielsweise allergisches Bronchial-Asthma oder sogar Pilzwachstum in der Lunge, einstellen.

Andererseits sollte jedoch die relative Luftfeuchte in Wohn- und Arbeitsräumen eine untere Grenze von 30% möglichst nicht unterschreiten, weil nämlich zu trockene Luft die Schleimhäute der Atmungsorgane in ihrer Funktion und Struktur schädigt sowie zu gesteigerter Infektanfälligkeit, beispielsweise Katarrhen, führt.

Besonders günstige Ergebnisse zur Vermeidung bzw. Beseitigung von Feuchteschäden in Wohn- und Arbeitsräumen stellen sich ein, wenn darin der Luftaustausch zumindest beim Unterschreiten einer bestimmten Grenztemperatur der Außenluft einsetzt, die etwa im Bereich von 15° C liegen kann.

Der Erfindung liegt die Aufgabe zugrunde, eine elektrische Relaissteuervorrichtung für einen Netzschalter der eingangs spezifizierten Art zu schaffen, die mit geringem baulichem Aufwand sowie raumsparend erstellt werden kann und deren Wirkungsweise praktisch nicht durch an deren elektrischen Bauelementen entstehende Verlustwärme beeinträchtigt wird.

Gelöst wird diese Aufgabe erfindungsgemäß im wesentlichen dadurch, daß der Schalt-Stromkreis für das Relais über einen Kondensator und einen Brückengleichrichter am Wechselstromnetz anliegt,
daß zwischen den Plus-Ausgang und den Minus-Ausgang des Brückengleichrichters ein Kondensator gelegt ist,
daß ein Transistor über seinen Kollektor und seinen Emitter in Reihe mit dem Relais an den Plus-Ausgang des Brückengleichrichters gelegt ist, während die Basis dieses Transistors über den Schaltkontakt mit dem Plus-Ausgang des Brückengleichrichters verbindbar ist,
und daß dabei der Schaltkontakt als Schaltglied eine Thermometerfeder oder eine Hygrometerfeder aufweist.

Praktische Versuche haben gezeigt, daß eine derartige elektrische Relaissteuervorrichtung es auf relativ einfache Art und Weise möglich macht, die thermische Behaglichkeit in Wohn- und Arbeitsräumen durch die selbsttätige Betriebssteuerung der dort installierten Geräte und/oder Anlagen zum Heizen, Kühlen, Lüften und Klimatisieren sowie ggf. zur Wärmerückgewinnung zu verbessern, ohne daß die relative Luftfeuchte im Raum den Wert von 50% nach oben wesentlich überschreitet und nach untern unter 30% absinkt.

Die Hysterese der Thermometerfeder oder Hygrometerfeder läßt sich nämlich problemlos so einstellen, daß der Bereich der thermischen Behaglichkeit innerhalb einer Schwankungsbereite der Raumluftfeuchte zwischen 30% und 50% liegt.

Da die Thermometerfeder und die Hygrometerfeder der vorgeschlagenen Relaissteuervorrichtung keiner Verlustwärme-Strahlung und/oder Strömung ausgesetzt sind, wie sie sich beim Einsatz eines Netzschaltgerätes -Netztransformators- zwangsläufig einstellen würde, ist ihre praxisgerechte Wirkungsweise auf Dauer gewährleistet.

Die Funktionssicherheit der elektrischen Relaissteuervorrichtung läßt sich erfindungsgemäß noch dadurch verbessern, daß parallel zu dem zwischen den Plus-Ausgang und den Minus-Ausgang des Brückengleichrichters geschalteten Kondensator zusätzlich ein Widerstand gelegt ist sowie die beiden Anschlüsse des Relais durch eine zu diesem parallel liegende Schutzdiode in Verbindung stehen, deren Sperrwirkung dem Stromfluß entgegengerichtet ist.

Besonders bewährt hat sich eine elektrische Relaissteuervorrichtung, bei der erfindungsgemäß der Schaltkontakt zwei in Reihe liegende Schaltglieder aufweist, wobei das eine Schaltglied von einer Thermometerfeder und das andere Schaltglied von einer Hygrometerfeder gebildet ist.

Nur dann, wenn und solange sowohl die Thermometerfeder als auch die Hygrometerfeder ihre Wirkstellung bzw. Schließstellung einnehmen, wird die elektrische Relaissteuervorrichtung aktiviert und der durch das Relais betätigbare Netzschalter aus seiner Ruhelage in die Arbeitslage, beispielsweise aus seiner Offenstellung in seine Geschlossenstellung, umgelegt.

Als besonders zweckmäßig und wirkungsvoll hat es sich erwiesen, wenn Thermometerfeder und/oder Hygrometerfeder die Form einer Spirale haben, welche gegenüber einem ortsfesten Kontaktteil bezüglich des von ihr zu durchlaufenden Stellweges abstandsjustierbar ist.

Damit läßt sich nämlich die elektrische Relaissteuervorrichtung sehr einfach und sicher auf unterschiedliche Auslöseparameter (Temperatur, Luftfeuchte) einstellen. So ist es beispielsweise ohne weiteres möglich, die Thermometerfeder so einzustellen, daß sie gegenüber ihrem ortsfesten Kontaktteil in Schließlage gelangt, wenn sie einer Lufttemperatur von 15° C oder weniger ausgesetzt ist. Andererseits kann die Hygrometerfeder beispielsweise so eingestellt werden, daß sie relativ zu ihrem ortsfesten Kontaktteil die Schließlage einnimmt, solange eine relative Luftfeuchte von 50% im Raum erreicht und überschritten wird.

Nach der Erfindung ist ferner vorgesehen, daß sämtliche Schaltungsteile auf einer gemeinsamen Leiterplatte sitzen bzw. montiert sind, so daß sie sich in enger Nachbarschaft zueinander ggf. auch in einem relativ klein bauenden Schutzgehäuse unterbringen lassen.

Für Wärmerückgewinnungsgeräte mit einem Zuluft-Strömungsweg und einem davon getrennten Abluft-Strömungsweg, denen zur zwangsweisen mechanischen Luftförderung elektrisch antreibbare Geläse zugeordnet sind, hat es sich als besonders zweckmäßig erwiesen, die elektrische Relaissteuervorrichtung mit Hilfe der sämtliche Schaltungsteile tragenden Leiterplatte so einzubauen, daß die Thermometerfeder unmittelbar im Zuluft-Strömungsweg und die Hygrometerfeder unmittelbar im Abluft-Strömungsweg angeordnet ist.

Solchermaßen ausgerüstete Wärmerückgewinnungsgeräte können das Raumklima völlig selbsttätig, also ohne ständige Überwachung durch Raumbewohner oder Raumbenutzer, so beeinflussen, daß die Luftfeuchte ein vorgebbares bzw. vorgegebenes oberes Niveau, beispielsweise von 50%, nie wesentlich überschreitet und damit dem Entstehen von Feuchteschäden leicht und sicher entgegengewirkt werden kann.

Damit läßt sich nämlich die elektrische Relaissteuervorrichtung sehr einfach und sicher auf unterschiedliche Auslöseparameter (Temperatur, Luftfeuchte) einstellen. So ist es beispielsweise ohne weiteres möglich, die Thermometerfeder so einzustellen, daß sie gegenüber ihrem ortsfesten Kontaktteil in Schließlage gelangt, wenn sie einer Lufttemperatur von 15° C oder weniger ausgesetzt ist. Andererseits kann die Hygrometerfeder beispielsweise so eingestellt werden, daß sie relativ zu ihrem ortsfesten Kontaktteil die Schließlage einnimmt, solange eine relative Luftfeuchte von 50% im Raum erreicht und überschritten wird.

Nach der Erfindung ist ferner vorgesehen, daß sämtliche Schaltungsteile auf einer gemeinsamen Leiterplatte sitzen bzw. montiert sind, so daß sie sich in enger Nachbarschaft zueinander ggf. auch in einem relativ klein bauenden Schutzgehäuse unterbringen lassen.

Für Wärmerückgewinnungsgeräte mit einem Zuluft-Strömungsweg und einem davon getrennten Abluft-Strömungsweg, denen zur zwangsweisen mechanischen Luftförderung elektrisch antreibbare Geläse zugeordnet sind, hat es sich als besonders zweckmäßig erwiesen, die elektrische Relaissteuervorrichtung mit Hilfe der sämtliche Schaltungsteile tragenden Leiterplatte so einzubauen, daß die Thermometerfeder unmittelbar im Zuluft-Strömungsweg und die Hygrometerfeder unmittelbar im Abluft-Strömungsweg angeordnet ist.

Solchermaßen ausgerüstete Wärmerückgewinnungsgeräte können das Raumklima völlig selbsttätig, also ohne ständige Überwachung durch Raumbewohner oder Raumbenutzer, so beeinflussen, daß die Luftfeuchte ein vorgebbares bzw. vorgegebenes oberes Niveau, beispielsweise von 50%, nie wesentlich überschreitet und damit dem Entstehen von Feuchteschäden leicht und sicher entgegengewirkt werden kann.

Die elektrische Relaissteuervorrichtung nach der Erfindung kann nicht nur zur selbsttätigen Steuerung von Heiz-, Kühl-, Lüftungs- und Klimageräten Die elektrische Relaissteuervorrichtung nach der Erfindung kann nicht nur zur selbsttätigen Steuerung von Heiz-, Kühl-, Lüftungs- und Klimageräten bzw. -anlagen sowie Wärmerückgewinnern benutzt werden. Sie ist vielmehr ebenfalls geeignet, kraftangetriebene Betätigungsvorrichtungen zu steuern, über die sich das zwangsweise Öffnen und Schließen von Fensterflügeln hervorbringen läßt.

In der Zeichnung sind Ausführungsbeispiele des Gegenstandes der Erfindung dargestellt. Es zeigt

Fig. 1 eine elektrische Relaissteuervorrichtung, bei der der Schaltkontakt im Schalt-Stromkreis für das Relais mit nur einem Schaltglied arbeitet,

Fig. 2 eine der Fig. 1 entsprechende Relaissteuervorrichtung, bei der jedoch der Schaltkontakt im Schalt-Stromkreis für das Relais mit zwei in Reihe liegenden Schaltgliedern ausgestattet ist und

Fig. 3 als Anwendungsbeispiel für eine elektrische Relaissteuervorrichtung ein Wärmerückgewinnungsgerät mit einem Zuluft-Strömungsweg und einem Abluft-Strömungsweg, denen zur zwangsweisen mechanischen Luftförderung ein elektrisch antreibbares Radial-Doppelgebläse zugeordnet ist.

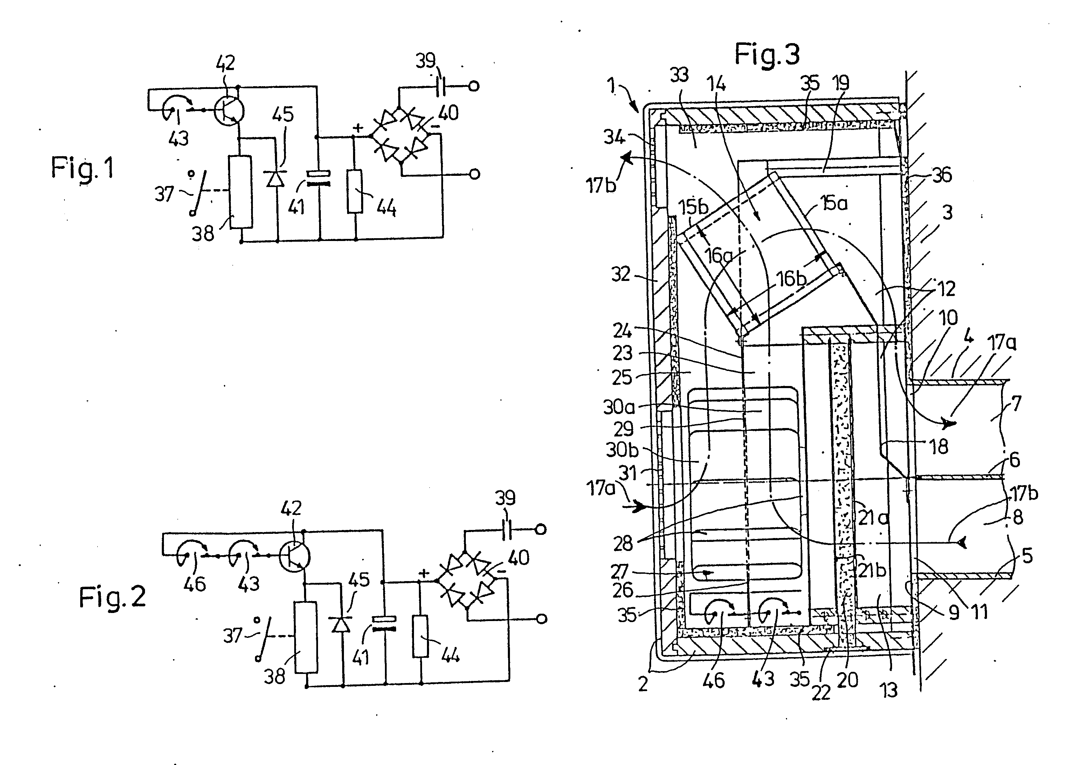

Fig. 3 der Zeichnung zeigt eine Lüftungsvorrichtung 1 zum gleichzeitigen Be- und Entlüften von Räumen, die in einem beispielsweise quaderförmigen Gehäuse 2 untergebracht ist.

Diese Lüftungsvorrichtung 1 wird beispielsweise rauminnenseitig an oder in einer Gebäudewand 3 angeordnet, die einen Durchbruch 4 nach außen aufweist, in den sich eine rohrförmige Auskleidung 5 einsetzen läßt. Die rohrförmige Auskleidung 5 hat dabei eine Trennwand 6, die innerhalb der Auskleidung 5 zwei Strömungskanäle 7 und 8 von etwa gleichem Querschnitt gegeneinander abgrenzt.

In der Rückwand 9 des Gehäuses 2 sind zwei Durchlässe 10 und 11 ausgespart, deren Querschnittsform jeweils auf die Strömungskanäle 7 und 8 abgestimmt ist und die sich an diese Strömungskanäle 7 und 8 anschließen.

Der Durchlaß 10 mündet innerhalb des Gehäuses 2 in eine Kammer 12, während der Durchlaß 11, ebenfalls innerhalb des Gehäuses 2 mit einer Kammer 13 verbunden ist.

Innerhalb des Gehäuses 2 ist ferner ein Wärmeübertrager 14 untergebracht, der rekuperativ arbeitet und beispielsweise eine Kreuzstrom-Bauart aufweist. Er besteht aus mindestens einem Lamellen- bzw. Plattenstapel, der aus einer größeren Anzahl von Einzellamellen bzw. -platten 15a und 15b zusammengesetzt ist, von denen jede einen etwa C-förmigen Querschnitt aufweisen kann und einen etwa quadratischen Grundriß hat. Diese Einzellamellen bzw. -platten 15a und 15b des Wärmeübertragers 14 sind dabei aus verhältnismäßig dünnem, gut wärmeleitendem Werkstoff, beispielsweise Aluminium- oder Kupferfolie, gefertigt und zur Bildung des Lamellen- bzw. Plattenstapels in gleicher Schichtungslage unmittelbar aufeinandergesetzt.

Die Einzellamellen bzw. -platten 15a und 15b sind wechselseitig um eine normal zu ihrer Ebene gerichtete Achse jeweils um 90° gegeneinander verdreht aufeinandergelegt, so daß zwischen ihnen Durchströmkanäle 16a und 16b eingeschlossen werden, die abwechselnd eine zueinander um 90° verdrehte Lage haben, damit die durch sie hindurchgeführten Luftströme 17a und 17b sich in den in Schichtlage aufeinanderfolgenden Strömungskanälen jeweils kreuzen.

Die Kammer 12 ist im Gehäuse 2 von der Kammer 13 durch eine relativ dünne Blechwand 18 abgetennt, welche unter mehrfacher Abwinklung von einer mit der Trennwand 6 der Auskleidung 5 Deckungslage aufweisenden Ebene innerhalb des Gehäuses 2 bis zu einer Scheitelkante des Wärmeübertragers 14 hochgeführt ist.

Nach oben wird die Kammer 12 im Gehäuse 2 durch eine Abschlußwand 19 begrenzt, die sich ebenfalls an eine Scheitelkante des Wärmeübertragers 14 anschließt und dadurch eine Verbindung der Kammer 12 mit den Durchströmkanälen 16a des Wärmeübertragers 14 herstellt.

An die Kammer 13 schließt sich ein plattenförmiger Filtereinsatz 20 an, der zwischen zwei Gruppen von stabförmigen Haltegliedern 21a und 21b ausgerichtet gehalten wird und im Bedarfsfalle durch eine Wandöffnung 22 des Gehäuses 2 aus- und eingebaut werden kann.

An den Filter 20 schließt sich innerhalb des Gehäuses eine Kammer 23 an, die wiederum durch eine von einem dünnen Schichtkörper, beispielsweise Blech, gebildete Wand 24 gegen eine Kammer 25 abgegrenzt ist.

Die Schichtkörper-Wand 24 ist dabei mit einem kreisförmigen Durchbruch 26 versehen, der axial von einem Gebläserad 27 eines elektrisch antreibbaren Radialgebläses 28 durchsetzt wird. Das Gebläserad 27 weist dabei eine radiale Trennwand 29 auf, die etwa in gleicher Ebene mit der Schichtkörper-Wand 24 liegt und damit das Gebläserad 27 in zwei etwa gleiche Hälften 30a und 30b unterteilt. Die Hälfte 30a desselben rotiert dabei innerhalb der Kammer 23, während seine Hälfte 30b in der Kammer 25 umläuft.

Das Gebläserad 27 des Radialgebläses 28 ist in Fluchtlage mit einer beispielsweise loch- bzw. schlitzgitterartig gestalteten Ansaugöffnung 31 in der raumseitigen Frontwand 32 des Gehäuses 2 angeordnet. Die Hälfte 30b des Gebläserades 27 saugt dabei Abluft aus dem Rauminneren in die Kammer 25, welche wiederum mit Durchströmkanälen 16a des Wärmeübertragers 14 in Dauerverbindung steht. Die in der Abluft, also im Luftstrom 17a, enthaltene Wärmeenergie wird dabei zum größten Teil vom Wärmeübertrager 14 aufgenommen, bevor diese Abluft durch die Kammer 12, den Durchlaß 10 und den Strömungskanal 7 als Fortluft nach außen gelangt.

Außenluft wird durch den Strömungskanal 8 der Auskleidung 5, die Kammer 13 und den Filter 20 von der Hälfte 30a des Gebläserades 27 in die Kammer 23 als Luftstrom 17b eingesaugt und von dort aus in die Durchströmkanäle 16b des Wärmeübertragers 14 transportiert. Dabei geht die vom Wärmeübertrager 14 aus dem Luftstrom 17a aufgenommene Transmisionswärme auf den Luftstrom 17b über, bevor dieser dann durch die Kammer 33 und die Austrittsöffnung 34 in der Frontwand 32 des Gehäuses 2 als Zuluft in den Raum gefördert wird.

Auch die Austrittsöffnung 34 in der Frontwand 32 des Gehäuses 2 kann in ähnlicher Weise wie die Ansaugöffnung 31 mit einem Loch- bzw. Schlitzgitter ausgestattet sein.

Damit die Lüftungsvorrichtung 1 auch eine schalldämmende Wirkung erreicht, ist es zweckmäßig, die Innenflächen des Gehäuses 2 mit Schallschluckwerkstoff 35, beispielsweise Schaumkunststoff, zu belegen, sowie auch zwischen Rückwand 9 des Gehäuses 2 und die Gebäudewand 3 eine Dämmschicht 36 einzubringen.

Die Betriebssteuerung des elektrisch angetriebenen Radialgebläses 28 der mit Wärmerückgewinnung arbeitenden Lüftungsvorrichtung 1 kann mit Hilfe einer elektrischen Relaissteuervorrichtung der in den Fig. 1 und 2 der Zeichnung dargestellten Art über einen Netzschalter 37 erfolgen, indem dieser den Elektromotor des Radialgebläses 28 entweder an die Nennspannung des Wechselstromnetzes von beispielsweise 220 Volt anlegt, oder aber, ihn von diesem Wechselstromnetz trennt.

Die in Fig. 1 der Zeichnung dargestellte elektrische Relaissteuervorrichtung arbeitet mit einem Kleinspannungs-Gleichstromrelais 38, beispielsweise mit einer Nennspannung von 12 Volt, wobei dessen Kontaktteil den Netzschalter 37 bildet.

Obwohl des ohne weiteres möglich ist, den Netzschalter 37 durch das Gleichstromrelais 38 als Öffnungskontakt zu betätigen, hat es sich als vorteilhaft erwiesen, diesen Netzschalter 37 als Schließkontakt vorzusehen.

Der Schalt-Stromkreis für das Relais 38 ist über einen Kondensator 39 und einen Brückengleichrichter 40 an das gleiche Niederspannungs-Wechselstromnetz gelegt, in dem sich auch der Netzschalter 37 für das Radialgebläse 28 befindet.

Zwischen dem Plus-Ausgang und dem Minus-Ausgang des Brückengleichrichters ist ein Kondensator 41 angeordnet. Darüberhinaus ist ein Transistor 42 vorgesehen, welcher über seinen Kollektor und seinen Emitter in Reihe mit dem Relais 38 an den Plus-Ausgang des Brückengleichrichters 40 gelegt ist. Die Basis dieses Transistors 42 ist hingegen über einen Schaltkontakt 43 mit dem Plus-Ausgang des Brückengleichrichters 40 wahlweise verbindbar oder aber hiervon trennbar.

Solange der Schaltkontakt 43 geschlossen ist, ist auch der Transistor 42 durchgeschaltet, so daß das Relais an Arbeitsspannung liegt und damit erregt ist.

Nach Öffnen des Schaltkontaktes 43 wird der Transistor 42 gesperrt, so daß das Relais 38 - ggf. etwas verzögert - abfällt und damit den Netzschalter 37 öffnet.

Zur Erhöhung der Funktionssicherheit der Relaissteuervorrichtung ist parallel zum Kondensator 41 zwischen den Plus-Ausgang und den Minus-Ausgang des Brückengleichrichters 40 noch ein Widerstand 44 gelegt und darüberhinaus stehen die beiden Anschlüsse des Relais 38 über eine Schutzdiode 45 in Verbindung, deren Sperrichtung entgegengesetzt zur Stromflußrichtung liegt.

Der Kondensator 38 für die elektrische Relaissteuervorrichtung nach Fig. 1 ist als Metallfolien- bzw. Kunststoffkondensator ausgelegt und hat eine Kapazität von 0,47μF bei einer Arbeitsspannung von 250 Volt Wechselstrom.

Als Brückengleichrichter 40 wird ein solcher des Typs PL60 eingesetzt.

Der Kondensator 41 ist als Elektrolytkondensator ausgeführt, mit einer Kapazität von 100μF für 16 Volt Gleichspannung.

Für den Transistor 42 hat sich die Benutzung des Typs BC 338 als vorteilhaft erwiesen, während der Widerstand 44 mit 1500 Ohm bei 0,2 Watt verwendet wird. Als Diode 45 wird eine solche des Typs 1 N 4148 eingesetzt.

Es hat sich gezeigt, daß eine solchermaßen ausgelegte elektrische Relaissteuervorrichtung unmittelbar von demjenigen Wechselstromnetz gespeist werden kann, in welchem auch der von ihm gesteuerte Netzschalter 37 liegt, ohne daß an ihren Bauelementen eine merklich Verlustwärme entsteht. Deshalb ist es auch ohne weiteres möglich, sämtliche Bauelemente dieser Relaissteuervorrichtung in enger Nachbarschaft auf einer gemeinsamen Leiterplatte anzuordnen, die so geringe Abmessungen hat, daß sie sich problemlos innerhalb des Gehäuses 2 der Lüftungsvorrichtung 1, und zwar vorzugsweise im Bereich der beiden Kammern 23 und 25 nahe dem Radialgebläse 28, unterbringen läßt.

Da über den Schaltkontakt 43 nur äußerst geringe Ströme zu schalten sind, wird dessen Schaltglied unmittelbar durch eine Thermometerfeder oder eine Hygrometerfeder gebildet.

Solche Thermometerfedern und/oder Hygrometerfedern haben üblicherweise die Form einer Spirale, die benutzt wird, um ein Zeigerglied analog der Umgebungstemperatur bzw. der relativen Luftfeuchtigkeit entlang einer Anzeigeskala eines Anzeigeinstrumentes zu verlagern.

Bei der vorstehend beschriebenen elektrischen Relaissteuervorrichtung wirkt jedoch die Thermometerfeder und/oder Hygrometerfeder - auch - unmittelbar als Schaltglied eines elektrischen Schaltkontaktes.

Das als Thermometerfeder arbeitende Schaltglied des Schaltkontaktes 43 wird von einem zu einer Spirale gewundenen Bimetallstreifen gebildet, wobei die Spirale so ausgelegt ist, daß sie sich innerhalb eines bestimmten Temperaturbereiches, z.B. zwischen 13° C und 27° C, feinjustieren läßt, wie er üblicherweise in Wohn- und/oder Arbeitsräumen herrscht.

Als Hygrometerfeder wird ein zu einer Spirale gewickelter Streifenkörper eingesetzt, der eine Schicht aus metallischem Material aufweist, die mit mindestens einer Schicht aus durch die Luftfeuchtigkeit stark beeinflußbarem, nämlich dehn- und schrumpffähigem, Werkstoff belegt ist.

Diese Hygrometerfeder ist dabei so gestaltet, daß sie sich innerhalb eines Arbeitsbereiches feinjustieren läßt, welcher mindestens zwischen 30% und 50% relativer Luftfeuchte liegt.

Wenn das Schaltglied des Schaltkontaktes 43 als Thermometerfeder ausgeführt ist, wird es vorzugsweise in die Kammer 23 der Lüftungsvorrichtung 1 gelegt, welche beim Betrieb des Radialgebläses 28 durch den Strömungskanal 8, die Kammer 13 und den Filter 20 mit Außenluft beaufschlagt ist.

Wird jedoch als Schaltglied für den Schaltkontakt 43 eine Hygrometerfeder eingesetzt, dann befindet sich diese vorzugsweise in der Kammer 25 der Lüftungsvorrichtung 1, welche beim Betrieb des Radialgebläses 28 mit der Abluft aus dem Raum beaufschlagt ist.

Als besonders vorteilhaft erweist sich jedoch für die selbsttätige Betriebssteuerung der Lüftungsvorrichtung 1 nach Fig. 3 eine elektrische Relaissteuervorrichtung in der aus Fig. 2 ersichtlichen Auslegung. Dort sind nämlich zwei in Reihe liegende Schaltkontakte 43 und 46 vorgesehen, von denen der Schaltkontakt 43 als Schaltglied eine Thermometerfeder und der Schaltkontakt 46 als Schaltglied eine Hygrometerfeder aufweist. Wird in diesem Falle der Schaltkontakt 43 der Kammer 23 und der Schaltkontakt 46 der Kammer 25 der Lüftungsvorrichtung 1 nach Fig. 3 zugeordnet, wie dies dort schema tisch vereinfacht dargestellt ist, dann geht das Radialgebläse 28 der Lüftungsvorrichtung 1 nur in Betrieb, sofern und solange sowohl die an der Thermometerfeder des Schaltkontaktes 43 einjustierten Temperaturparameter als auch die an der Hygrometerfeder des Schaltkontaktes 46 einjustierten Luftfeuchteparameter vorliegen.

Ist beispielsweise die Thermometerfeder des Schaltkontaktes 43 so eingestellt, daß dieser bei einer Außenluft-Temperatur schließt deren obere Grenze bei etwa 15° C liegt, und hat die Hygrometerfeder des Schaltkontaktes 46 eine Einstellung, nach der dieser erst bei Überschreiten einer relativen Raumluftfeuchte von 50% in die Schließlage gelangt, dann geht das Radialgebläse 28 nur bei gleichzeitigem Vorliegen beider Parameter tatsächlich in Betrieb.

Selbstverständlich können die elektrischen Relaissteuervorrichtungen nach den Fig. 1 und 2 auch so ausgelegt werden, daß ihre Schaltkontakte 43 und 46 beim Überschreiten vorgegebener Außenlufttemperaturen sowie beim Unterschreiten einer ebenfalls vorgegebenen Raumluftfeuchte das Radialgebläse 28 der Lüftungsvorrichtung 1 vom Wechselstromnetz trennen bzw. nicht an dieses anlegen.

Die anhand der Fig. 3 ausführlich beschriebene, als Wärmerückgewinnungsgerät betreibbare Lüftungsvorrichtung 1 ist nur als eines vieler möglicher Anwendungsbeispiele für die in den Fig. 1 und 2 dargestellten Relaissteuervorrichtungen anzusehen. Diese können nämlich auch ohne weiteres zur selbsttätigen Steuerung von Geräten und/oder Anlagen zum Heizen, Kühlen, Lüften und Klimatisieren von Räumen eingesetzt werden. Insbesondere ist hierdurch auch die Steuerung von Stellantrieben zum zwangsweisen Öffnen und Schließen von Fenstern, Klappen und Lucken möglich, wie sie in Hochbauten, vornehmlich Wohnungen und Büros, zum Einsatz gelangen.

## Ansprüche

1. Elektrische Relaissteuervorrichtung für einen Netzschalter, insbesondere zur selbsttätigen Betriebssteuerung von Geräten und/oder Anlagen zum Heizen, Kühlen, Lüften und Klimatisieren von Räumen sowie zur Wärmerückgewinnung, bei welcher ein Kleinspannungs-Gleichstromrelais, z.B. mit einer Nennspannung von 12 Volt, durch mindestens einen Schaltkontakt mit einem Niederspannungs-Wechselstromnetz, von beispielsweise 220 Volt Nennspannung, verbindbar ist, dadurch gekennzeichnet, daß der Schalt-Stromkreis für das Relais (38) über einen Kondensator (39) und einen Brückengleichrichter (40) am Wechselstromnetz anliegt, daß zwischen den Plus-Ausgang und den Minus-Ausgang des Brückengleichrichters (40) ein weiterer Kondensator (41) gelegt ist, daß ein Transistor (42) über seinen Kollektor und seinen Emitter in Reihe mit dem Relais (38) an den Plus-Ausgang des Brückengleichrichters (40) gelegt ist, während die Basis dieses Transistors (42) über den Schaltkontakt (43 bzw. 43, 46) mit dem Plus-Ausgang des Brückengleichrichters (40) verbindbar ist, und daß dabei der Schaltkontakt (43 bzw. 43, 46) als Schaltglied eine Thermometerfeder oder eine Hygrometerfeder aufweist.

2. Elektrische Relaissteuervorrichtung nach Anspruch 1, dadurch gekennzeichnet, daß parallel zum zweiten Kondensator (41) ein Widerstand (44) gelegt ist und daß die beiden Anschlüsse des Relais (38) durch eine zu ihm parallel liegende Schutzdiode (45) in Verbindung stehen.

3. Elektrische Relaissteuervorrichtung nach einem der Ansprüche 1 und 2,
dadurch gekennzeichnet,
daß der Schaltkontakt (43, 46) zwei in Reihe liegende Schaltglieder aufweist, wobei das eine Schaltglied von einer Thermometerfeder und das andere Schaltglied von einer Hygrometerfeder gebildet ist.

4. Elektrische Relaissteuervorrichtung nach einem der Ansprüche 1 bis 3,
dadurch gekennzeichnet,
daß die Thermometerfeder und/oder die Hygrometerfeder die Form einer Spirale haben, welche gegenüber einem ortsfesten Kontaktteil bezüglich des von ihr zu durchlaufenden Stellweges abstandsjustierbar angeordnet und/oder ausgebildet ist.

5. Elektrische Relaissteuervorrichtung nach einem der Ansprüche 1 bis 4,
dadurch gekennzeichnet,
daß sämtliche Schaltungsteile (39 bis 46) auf einer gemeinsamen Leiterplatte sitzen bzw. montiert sind.

6. Elektrische Relaissteuervorrichtung nach einem der Ansprüche 1 bis 5 für Wärmerückgewinnungsgeräte (1) mit einem Zuluft-Strömungsweg (17b) und einem davon getrennten Abluft-Strömungsweg (17a), denen zur zwangsweisen mechanischen Luftförderung elektrisch antreibbare Gebläse (28, 30a, 30b) zugeordnet sind,
dadurch gekennzeichnet,
daß der eine Thermometerfeder als Schaltglied aufweisende Schaltkontakt (z.B. 43) im Zuluft-Strömungsweg (17b) und der eine Hygrometerfeder als Schaltglied aufweisende Schaltkontakt (beispielsweise 46) im Abluft-Strömungsweg (17a) angeordnet ist (Fig. 3).

Fig.1

Fig.2

Fig.3